# FASCICULE DE BREVET EUROPEEN

(11) **EP 1 348 604 B1**
(45) Date de publication et mention de la délivrance du brevet: **21.05.2008**
(21) Numéro de dépôt: 03290508.5
(22) Date de dépôt: 04.03.2003
(51) Int. Cl.: B61D 35/00, B60R 15/00, B63B 29/14, A47K 4/00

(54) **Bloc sanitaire pour véhicule, notamment ferroviaire**
Nasszelle für ein Fahrzeug, insbesondere für ein Schienenfahrzeug
Sanitary unit for a vehicle, in particular a railway vehicle

(30) Priorité: 28.03.2002 FR 0203911
(43) Date de publication de la demande: 01.10.2003
(73) Titulaire: Alstom, 92300 Levallois-Perret (FR)
(72) Inventeur: Leclercq, Bernard, 59300 Famars (FR); Renaud, Bernard, 38302 Wolfenbüttel (DE)
(74) Mandataire: de Lambilly Delorme, Marie Pierre

(56) Documents cités:
- DE-A- 2 448 980
- US-A- 4 718 131

## Description

L'invention se rapporte à un bloc sanitaire pour véhicule, notamment ferroviaire, présentant une cabine munie d'au moins une cuvette de WC ou d'un lavabo.

Il est courant d'équiper les véhicules ferroviaires de blocs sanitaires comportant une cabine munie d'équipements tels qu'une cuvette de WC ou un lavabo. De tels blocs sanitaires sont habituellement raccordés à des réservoirs d'eau claire et de rétention des eaux usées disposés sous le châssis du véhicule. Un tel agencement avec les réservoirs séparés et éloignés du bloc sanitaire présente cependant l'inconvénient de compliquer le montage du bloc sanitaire, en mettant en oeuvre de nombreux raccordements, mais également d'encombrer le sous-châssis du véhicule avec les réservoirs.

Il est connu, du brevet US 6 101 766 (préambule de la revendication 1), un bloc sanitaire intégrant un réservoir de rétention des eaux usées dans l'une de ses parois latérales et présentant un plafond supportant un réservoir d'eau claire. Un tel bloc sanitaire présente l'avantage d'avoir des réservoirs qui n'encombrent pas le sous-châssis du véhicule mais présente toutefois l'inconvénient de nécessiter des parois présentant une structure suffisamment rigide pour pouvoir supporter le réservoir d'eau claire, ce dernier étant de plus, compte tenu de sa disposition, de faible capacité et en conséquence nécessairement raccordé à un circuit d'alimentation en eau du train, ce qui complique son montage. Un tel bloc sanitaire présente également l'inconvénient d'avoir une cabine dont la hauteur sous plafond est limitée par la taille du réservoir d'eau claire. Enfin, l'agencement d'un tel bloc sanitaire est tel que, pour un gabarit extérieur donné, le réservoir de rétention des eaux usées implanté dans l'une des parois réduit d'autant la largeur utile de la cabine.

Aussi, un but de la présente invention est de remédier à ces inconvénients en proposant un bloc sanitaire à l'agencement optimisé qui embarque tous les équipements nécessaires à son fonctionnement et ceci sans réduction notable de l'espace ergonomique interne de la cabine.

A cet effet, l'invention a pour objet un bloc sanitaire pour véhicule, notamment ferroviaire, comportant une cabine munie d'au moins une cuvette de WC ou d'un lavabo, le bloc sanitaire présentant extérieurement un gabarit sensiblement parallélépipédique adapté pour s'insérer dans un logement d'accueil prévu dans le véhicule, le bloc sanitaire intégrant à l'intérieur du gabarit au moins un réservoir d'eau claire et un réservoir de rétention des eaux usées nécessaires au fonctionnement du bloc sanitaire, caractérisé en ce que les réservoirs d'eau claire et de rétention des eaux usées sont disposés chacun verticalement dans un angle du gabarit parallélépipédique, les réservoirs d'eau claire et de rétention des eaux usées présentant d'un côté une forme en coin épousant l'angle du gabarit parallélépipédique et, à l'opposé, une paroi orientée vers la cabine épousant sensiblement la forme de la cabine.

Selon des modes particuliers de réalisation, le bloc sanitaire selon l'invention peut comprendre l'une ou plusieurs des caractéristiques suivantes prises isolément ou selon toutes les combinaisons techniquement possibles :
- la paroi du réservoir orientée vers la cabine présente une forme arrondie ;
- la paroi du réservoir orientée vers la cabine est en arc de cercle ;
- la paroi du réservoir orientée vers la cabine épouse une cloison délimitant la cabine ;
- la paroi du réservoir orientée vers la cabine constitue localement une cloison délimitant la cabine ;
- chacun des réservoirs d'eau claire et d'eaux usées s'étend sensiblement sur toute la hauteur du gabarit du bloc sanitaire.

On comprendra mieux les buts, aspects et avantages de la présente invention, d'après la description donnée ci-après de plusieurs modes de réalisation de l'invention, présentés à titre d'exemples non limitatifs, en se référant aux dessins annexés, dans lesquels :
- la figure 1 est une vue en perspective, partiellement arrachée, d'un bloc sanitaire selon un mode particulier de réalisation de l'invention ;
- la figure 2 est une vue de dessus du bloc sanitaire de la figure 1 ;
- la figure 3 est une vue de dessus d'une variante de réalisation du bloc sanitaire selon l'invention. ;
- la figure 4 est une vue de dessus d'une autre variante de réalisation du bloc sanitaire selon l'invention.

Pour faciliter la lecture du dessin, seuls les éléments nécessaires à la compréhension de l'invention ont été représentés.

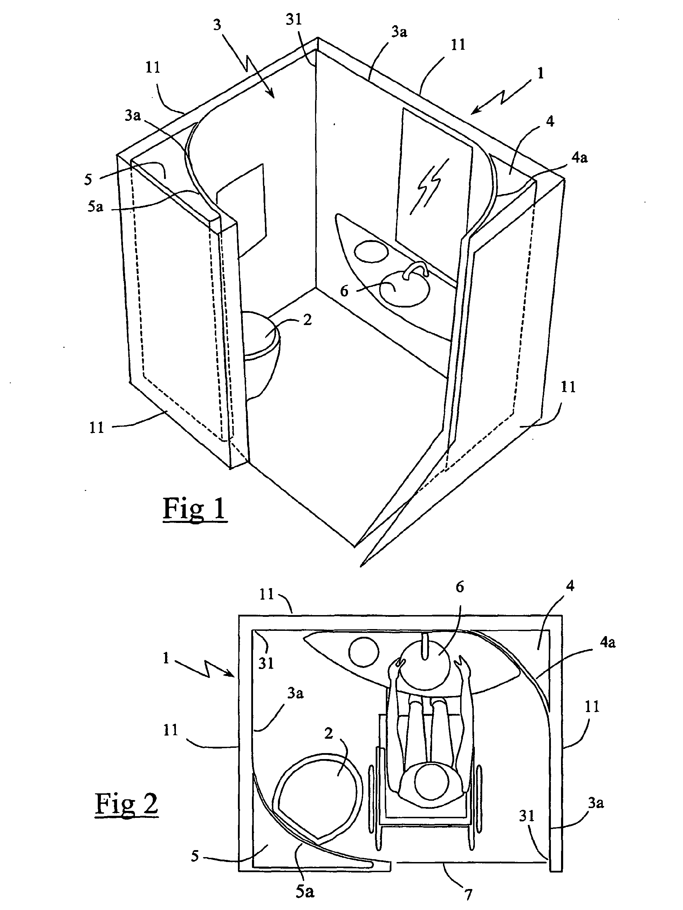

La figure 1 présente un bloc sanitaire destiné à être installé dans un véhicule ferroviaire. Conformément à cette figure, le bloc sanitaire comporte extérieurement un gabarit 1 en forme de parallélépipède rectangle, délimité par un ensemble de parois latérales 11, ce gabarit 1 étant adapté pour s'insérer dans un logement d'accueil prévu sur le véhicule ferroviaire. A l'intérieur du gabarit 1, le bloc sanitaire comporte une cabine 3 délimitée par deux cloisons internes 3a de forme arquée, ces cloisons internes 3a étant disposées légèrement en retrait des parois latérales 11 du gabarit 1.

Les cloisons internes 3a sont assemblées l'une contre l'autre au niveau de deux arêtes verticales 31 disposées au voisinage de deux coins opposés du gabarit 1 parallélépipédique, chaque cloison interne 3a s'étendant, à proximité des arêtes 31, parallèlement à la paroi latérale 11 la plus proche. Les cloisons internes 3a présentent, en regard des deux autres coins du gabarit 1, une forme en arc de cercle de fort rayon de sorte qu'il résulte un espace important entre la partie en arc de cercle des cloisons internes 3a et les parois latérales 11 les plus proches.

Conformément à l'invention, un réservoir d'eau claire 4 et un réservoir de rétention des eaux usées 5 sont disposés chacun dans un angle du gabarit 1 parallélépipédique, au niveau des deux espaces libérés par les parties en arc de cercle des cloisons internes 3a. Ces réservoirs 4 et 5 s'étendent verticalement sur sensiblement toute la hauteur du gabarit 1 et présentent d'un côté une forme en coin épousant l'angle formé par les parois latérales 11 et à l'opposé une paroi 4a,5a épousant la forme de la cloison 3a en arc de cercle délimitant la cabine 3.

Ces réservoirs d'eau claire 4 et de rétention des eaux usées 5 sont reliés, de manière connue en soi, à une cuvette 2 de WC qui est disposée dans la cabine 3 contre la partie en arc de cercle de l'une des deux cloisons internes 3a, l'autre cloison recevant, le long de sa partie rectiligne, un lavabo 6 porté par une tablette, cette dernière s'étendant également partiellement sur la partie en arc de cercle de la cloison 3a. Une ouverture, fermée par une porte 7, est ménagée dans la partie rectiligne de la cloison 3a disposée sensiblement en regard du lavabo 6 afin de permettre l'accès à la cabine 3.

Des éléments non représentés sur les figures 1 et 2, tels que tuyauteries, pompes de circulation et réchauffeurs, nécessaires au bon fonctionnement du bloc sanitaire, sont avantageusement disposés dans l'espace résultant entre les cloisons internes 3a de la cabine 3 et les parois latérales 11 du gabarit. De manière avantageuse les parois latérales 11 comportent des trappes d'accès permettant la maintenance de ces éléments sans démontage du bloc sanitaire.

Un tel bloc sanitaire présente l'avantage d'embarquer, dans un gabarit donné, l'ensemble des éléments nécessaires au fonctionnement du bloc sanitaire sans nuire notablement à l'espace ergonomique interne de la cabine du bloc sanitaire. Un tel bloc sanitaire présente également l'avantage d'être sous la forme d'un module indépendant qui peut être préassemblé et testé en dehors du véhicule. Ainsi, un tel bloc sanitaire peut être inséré d'un seul bloc dans le véhicule ferroviaire.

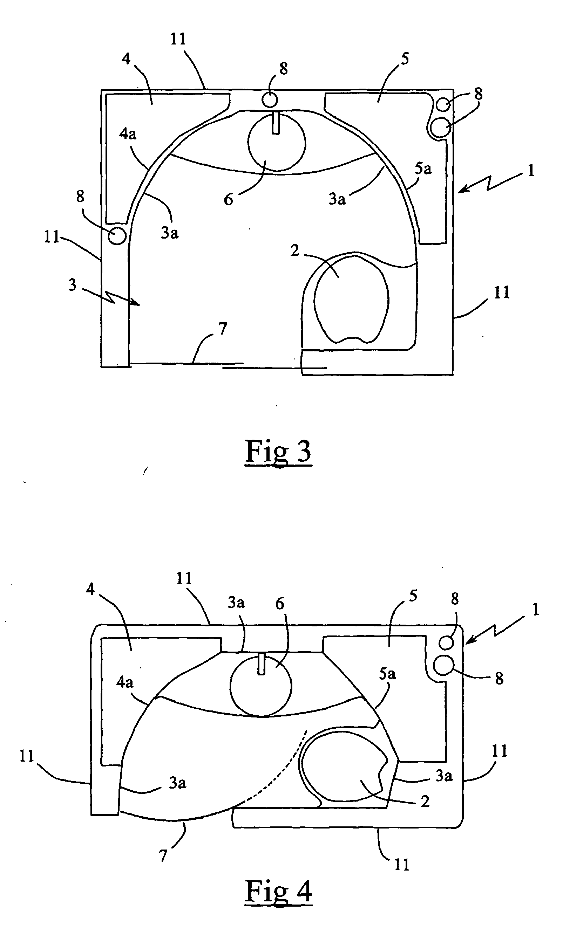

La figure 3 représente une variante de réalisation de l'invention dans laquelle le bloc sanitaire conserve extérieurement un gabarit 1 parallélépipédique, similaire à celui de la figure 1, délimités par des parois latérales 11. Cette variante se différentie du bloc sanitaire des figures 1 et 2 en ce que les réservoirs d'eau claire 4 et de rétention des eaux usées 5 sont disposés dans deux angles du gabarit parallélépipédique 1 situés sur un même côté, les réservoirs 4 et 5 présentant d'un côté une forme en coin épousant l'angle du gabarit 1 et à l'opposé une paroi 4a,5a épousant une cloison interne 3a délimitant localement la cabine 3 du bloc sanitaire. Conformément à la figure 3, les cloisons internes 3a délimitant la cabine 3 du bloc sanitaire s'étendent en arc de cercle devant les angles occupés par les réservoirs 4 et 5 et s'étendent, en dehors de ces zones, parallèlement aux parois latérales 11, en étant disposées légèrement en retrait de ces dernières.

La cabine 3 comporte de manière habituelle un lavabo 6, ce dernier étant ici disposé contre la cloison interne 3a s'étendant entre les deux réservoirs 4 et 5, la cloison interne 3a opposée au lavabo 6 recevant d'une part une cuvette 2 de WC dans un coin et d'autre part une porte coulissante 7 permettant l'accès à la cabine 3. Des éléments 8 tels que tuyauteries, pompes de circulation et réchauffeurs nécessaires au bon fonctionnement du bloc sanitaire sont disposés dans l'espace résultant entre les cloisons internes 3a de la cabine 3 et les parois latérales 11 du gabarit 1.

Une telle variante de réalisation présente l'avantage d'assurer une ergonomie optimale dans un volume limité.

La figure 4 présente une autre variante de réalisation de l'invention dans laquelle le gabarit 1 parallélépipédique du bloc sanitaire, délimité par les parois latérales 11, est de dimension réduite. Dans cette variante, les réservoirs d'eau claire 4 et de rétention des eaux usées 5 sont disposés dans deux angles du gabarit parallélépipédique 1 situés d'un même coté, chaque réservoir 4,5 présentant d'un côté une forme en coin épousant l'angle du gabarit 1 et à l'opposé une paroi 4a,5a en forme d'arc de cercle constituant une cloison interne de la cabine 3. La cabine 3 est délimitée entre les deux réservoirs 4 et 5 par une cloison interne 3a disposée dans le prolongement des parois 4a,5a en forme d'arc de cercle et est délimitée latéralement par des cloisons internes 3a s'étendant sensiblement parallèlement aux parois latérales 11. Un lavabo 6 est disposé contre la cloison interne 3a s'étendant entre les deux réservoirs 4 et 5, la cloison interne 3a opposée recevant d'une part une cuvette 2 de WC et d'autre part une porte coulissante 7 arquée s'ouvrant suivant une cinématique en arc de cercle.

Des éléments 8, tels que tuyauteries, pompes de circulation et réchauffeurs, nécessaires au bon fonctionnement du bloc sanitaire sont, tout comme dans les autres modes de réalisation, disposés dans l'espace résultant entre les cloisons internes 3a et les parois latérales 11 du gabarit 1.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Bloc sanitaire pour véhicule, notamment ferroviaire, comportant une cabine (3) munie d'au moins une cuvette de WC (2) ou d'un lavabo (6), ledit bloc sanitaire présentant extérieurement un gabarit (1) sensiblement parallélépipédique adapté pour s'insérer dans un logement d'accueil prévu dans ledit véhicule, ledit bloc sanitaire intégrant à l'intérieur dudit gabarit (1) au moins un réservoir d'eau claire (4) et un réservoir de rétention d'eaux usées (5), **caractérisé en ce que** lesdits réservoirs d'eau claire (4) et de rétention des eaux usées (5) sont disposés chacun verticalement dans un angle du gabarit (1) parallélépipédique, lesdits réservoirs d'eau claire (4) et de rétention des eaux usées (5) présentant d'un côté une forme en coin épousant l'angle du gabarit (1) parallélépipédique et, à l'opposé, une paroi (4a, 5a) orientée vers la cabine (3) épousant sensiblement la forme de ladite cabine (3).

2. Bloc sanitaire selon la revendication 1, **caractérisé en ce que** la paroi (4a, 5a) présente une forme arrondie.

3. Bloc sanitaire selon la revendication 2, **caractérisé en ce que** la paroi (4a, 5a) est en arc de cercle.

4. Bloc sanitaire selon l'une quelconque des revendications 1 à 3, **caractérisé en ce que** la paroi (4a, 5a) épouse une cloison (3a) délimitant localement la cabine (3).

5. Bloc sanitaire selon l'une quelconque des revendications 1 à 3, **caractérisé en ce que** ladite paroi (4a, 5a) constitue localement une cloison délimitant la cabine (3).

6. Bloc sanitaire selon l'une quelconque des revendications 1 à 5, **caractérisé en ce que** chacun desdits réservoirs d'eau claire (4) et d'eaux usées (5) s'étend sur sensiblement toute la hauteur du gabarit (1) du bloc sanitaire.

## Claims

1. Sanitary unit for a vehicle, especially a railway vehicle, comprising a cabin (3) provided with at least one WC pan (2) or with a washbasin (6), the sanitary unit having on the outside a substantially parallelepipedal template (1) suitable for insertion into a receiving housing provided in the vehicle, the sanitary unit incorporating on the inside of the template (1) at least one reservoir for clear water (4) and one reservoir for retaining waste water (5), **characterised in that** the reservoirs for clear water (4) and for retaining waste water (5) are each disposed upright in an angle of the parallelepipedal template (1), the reservoirs for clear water (4) and for retaining waste water (5) having, on one side, a corner shape fitting the angle of the parallelepipedal template (1) and, on the opposite side, a wall (4a, 5a) oriented towards the cabin (3) and substantially corresponding in shape to the cabin (3).

2. Sanitary unit according to claim 1, **characterised in that** the wall (4a, 5a) has a rounded shape.

3. Sanitary unit according to claim 2, **characterised in that** the wall (4a, 5a) is in the shape of an arc of a circle.

4. Sanitary unit according to any one of claims 1 to 3, **characterised in that** the wall (4a, 5a) corresponds in shape to a partition (3a) delimiting the cabin (3) locally.

5. Sanitary unit according to any one of claims 1 to 3, **characterised in that** the wall (4a, 5a) constitutes locally a partition delimiting the cabin (3).

6. Sanitary unit according to any one of claims 1 to 5, **characterised in that** each of the reservoirs for clear water (4) and for waste water (5) extends over substantially the entire height of the template (1) of the sanitary unit.

## Patentansprüche

1. Sanitärblock für ein Fahrzeug, insbesondere für ein Schienenfahrzeug, eine Kabine (3) aufweisend, die mindestens mit einem WC-Becken (2) oder einem Waschbecken (6) ausgestattet ist, wobei der Sanitärblock außen eine im Wesentlichen parallelepipede Schablone (1) aufweist, die zum Einsetzen in einen Aufnahmeraum geeignet ist, der in dem Fahrzeug vorgesehen ist, wobei der Sanitärblock im Inneren der Schablone (1) mindestens einen Reinwassertank (4) und einen Abwasser-Aufnahmetank (5) aufweist, **dadurch gekennzeichnet, dass** der Reinwassertank (4) und der Abwasser-Aufnahmetank (5) jeweils vertikal in einer Ecke der parallelepipeden Schablone (1) angeordnet sind, wobei der Reinwassertank (4) und der Abwasser-Aufnahmetank (5) auf einer Seite eine Keilform, die sich der Ecke der parallelepipeden Schablone (1) anpasst, und gegenüber eine Wand (4a, 5a) aufweisen, die zu der Kabine (3) hin ausgerichtet ist, die im Wesentlichen an die Form der Kabine (3) angepasst ist.

2. Sanitärblock gemäß Anspruch 1, **dadurch gekennzeichnet, dass** die Wand (4a, 5a) eine runde Form aufweist.

3. Sanitärblock gemäß Anspruch 2, **dadurch gekennzeichnet, dass** die Wand (4a, 5a) kreisbogenförmig ist.

4. Sanitärblock gemäß einem der Ansprüche 1 bis 3, **dadurch gekennzeichnet, dass** die Wand (4a, 5a) sich einer Trennwand (3a) anpasst, die die Kabine (3) örtlich abgrenzt.

5. Sanitärblock gemäß einem der Ansprüche 1 bis 3, **dadurch gekennzeichnet, dass** die Wand (4a, 5a) örtlich eine Trennwald bildet, die die Kabine (3) abgrenzt.

6. Sanitärblock gemäß einem der Ansprüche 1 bis 5, **dadurch gekennzeichnet, dass** sich jeder von dem Reinwassertank (4) und dem Abwassertank (5) im Wesentlichen über die gesamte Höhe der Schablone (1) des Sanitärblocks erstreckt.
